# EUROPEAN PATENT SPECIFICATION

(11) **EP 2 692 240 B1**
(45) Date of publication and mention of the grant of the patent: **03.05.2017**
(21) Application number: 12764076.1
(22) Date of filing: 30.03.2012
(51) Int. Cl.: A23G 3/34, A23G 1/00, A23G 1/30, A23G 4/00

(54) **FLOWABLE FOOD COMPOSITION AND CONFECTION**
FLIESSFÄHIGE NAHRUNGSMITTELZUSAMMENSETZUNG UND SÜSSWARE DARAUS
COMPOSITION ALIMENTAIRE FLUIDE ET CONFISERIE

(30) Priority: 31.03.2011 JP 2011079051
(43) Date of publication of application: 05.02.2014
(73) Proprietor: Mondelez Japan Limited, Shingawa-ku Tokyo 141-8656 (JP)
(72) Inventor: KAMAKURA, Yoshimitsu, Tokyo 141-8656 (JP); SEGAWA, Hiroshi, Tokyo 141-8656 (JP)
(74) Representative: Wilson Gunn
(86) International application number: PCT/JP2012/058558
(87) International publication number: WO 2012/133757

(56) References cited:
- EP-A2- 0 696 449
- WO-A1-00/15048
- WO-A1-00/15236
- WO-A1-92/06943
- WO-A1-95/02967
- WO-A1-95/17829
- WO-A1-2008/030274
- JP-A- 3 206 864
- JP-A- 11 209 253
- JP-A- 2005 289 946
- JP-A- 2006 204 132
- JP-A- 2011 177 087
- JP-A- 2011 229 493
- JP-A- 2011 250 702

## Description

### TECHNICAL FIELD

The present invention relates to a fluidic food composition and a confectionary.

### BACKGROUND ART

Traditionally, sugar has been used as the main sweetening ingredient for fluidic food compositions having low water content such as jam, paste, syrup and center compositions for confectionaries. However, with the growing interest in healthier food in recent times, sugar alcohol is gaining popularity as an alternative to sugar.

Patent Publication 1 discloses a center composition for candies comprising starch syrup or reduced sugar syrup, sorbitol or mannitol, and ethyl alcohol or glycerol, among others. Patent Publication 2 discloses a center composition for a chewing gum comprising sorbitol as well as glycerol, among others.
Patent Document 1: Japanese Unexamined Patent
   Application, Publication No. H05 - 184299
Patent Document 2: Japanese Unexamined Patent Application (Translation of PCT Application), Publication No. 2009-527256.

WO 00/15236 describes a liquid xylitol composition that is non-crystallizing at low temperatures comprising xylitol in an amount of 65-90 wt% of dry solids, and sorbitol in an amount of 10-35 wt% of dry solids. WO 92/06943 describes a shelf-stable liquid xylitol product containing xylitol at a level of 50-90% of dry solids, with the remainder of the liquid product consists of other polyols, such as sorbitol, maltitol, mannitol or glycerol.

### DISCLOSURE OF THE INVENTION

### Problems to be Solved by the Invention

Xylitol has been known to have superior characteristics in terms of the intensity and quality of sweetness. However, xylitol has a higher propensity to crystallize compared to the sugar alcohol described in patent publications 1 and 2. As far as food containing sufficient amount of water such as beverages and jelly-like foods are concerned, xylitol can be dissolved fully, therefore, the problem of loss of fluidity due to the crystallization of xylitol is not encountered.

On the other hand, fluidic compositions such as jam, paste, syrup and center compositions for confectionaries require a long-term stability in product quality under room temperature storage conditions, thus, there is always a risk of putrefaction due to bacterial contamination. Furthermore, in the case of center compositions for confectionaries, there is a risk of severely compromising the quality of the confectionaries due to the migration of water from the center composition to the surrounding confectionary. It is therefore preferable not to include water more than absolutely necessary when producing fluidic compositions such as jam, paste, syrup and center compositions for confectionaries.

However, when the water content is low, xylitol cannot be dissolved fully, leading to the crystallization of xylitol, and the loss of the fluidity of the original food product, ultimately making it difficult to maintain the fluidity of compositions containing xylitol for a long period of time. Due to this reason, it has not been possible traditionally to include xylitol in a sufficient amount for obtaining superior sweetness, when using xylitol in fluidic compositions such as jam, paste, syrup and center compositions for confectionaries.

The present invention has been made to address the issues described above, and aims at providing a fluidic composition that contains sufficient amount of xylitol for obtaining superior sweetness, while achieving the long-term maintenance of fluidity despite low water content, and to provide confectionaries using such fluidic compositions.

### Means for Solving the Problems

The inventors of the present invention discovered that combining xylitol with glycerol and other sugar alcohols can inhibit hardening due to the crystallization of xylitol in spite of extreme low water content, and can guarantee fluidity, thereby completing the present invention. The present invention provides the following.

In a first aspect of the present invention provided is a fluidic food composition which is fluidic at 25°C, comprising glycerol, an effective sweetness conferring amount of xylitol and at least one kind of sugar alcohol excluding xylitol and glycerol,
wherein the effective sweetness conferring amount of xylitol is no less than 20% by mass and no more than 80% by mass relative to the fluidic food composition, wherein a content of water relative to the fluidic food composition is less than 5% by mass, wherein a content of glycerol relative to the fluidic food composition is no less than 5% by mass and no more than 80% by mass, and wherein the fluidic food composition has an absence of crystals of xylitol.

In a second aspect of the present invention provided is the fluidic food composition according to the first aspect, in which the sugar alcohol is selected from a group consisting of sorbitol, maltitol and reduced palatinose.

In a third aspect of the present invention provided is the fluidic food composition according to the first aspect, in which the content of glycerol relative to the fluidic food composition is no less than 10% by mass and no more than 80% by mass.

In a fourth aspect of the present invention provided is the fluidic food composition according to the third aspect, in which the content of glycerol relative to the fluidic food composition is no less than 10% by mass and no more than 50% by mass.

In a fifth aspect of the present invention provided is the fluidic food composition according to the fourth aspect, in which the content of glycerol relative to the fluidic food composition is no less than 20% by mass and no more than 50% by mass.

In a sixth aspect of the present invention, the fluidic food composition according to any one of the first to fifth aspects is used as a center composition for a confectionary selected from a group consisting of candy, chewing gum and chocolate.

In a seventh aspect of the present invention provided is the fluidic food composition according to any one of the first to sixth aspects, in which the content of ethyl alcohol relative to the fluidic food composition is less than 1% by mass.

In an eighth aspect of the present invention provided is a confectionary including: a center composition including the fluidic food composition according to any one of the first to seventh aspects; and a shell composition that surrounds at least a part of the center composition, the shell composition being selected from a group consisting of candy, chewing gum and chocolate.

In a ninth aspect of the present invention provided is the confectionary according to the eighth aspect, in which the shell composition fully surrounds the center composition.

### Effects of the Invention

According to the present invention, glycerol and other sugar alcohols inhibit the crystallization of xylitol even when the effective sweetness conferring amount of xylitol is added, therefore, it can provide a fluidic food composition that maintains fluidity for a long period of time, in spite of having a sufficient amount of xylitol for obtaining a superior sweetness as well as having a low water content, and also provide a confectionary using such a fluidic food composition.

### BRIEF DESCRIPTION OF THE DRAWINGS

FIG. 1 is a graph showing absence of crystal in a fluidic food composition according to an Example of the present invention;
FIG. 2 is a graph showing absence of crystal in a fluidic food composition according to another Example of the present invention;
FIG. 3 is a graph showing presence of crystal in a substance according to a Comparative Example; and
FIG. 4 is a graph showing presence of crystal in a composition according to another Comparative Example.

### PREFERRED MODE FOR CARRYING OUT THE INVENTION

Below, the preferred mode of carrying out the present invention is described in detail, however, this description in no way limits the present invention.

### Fluidic food composition

The fluidic food composition according to the present invention comprises an effective sweetness conferring amount of xylitol and more than one kind of sugar alcohol excluding xylitol or glycerol. The crystallization of xylitol is inhibited by glycerol and other sugar alcohols, so that a fluidic food composition that maintains fluidity for a long period of time in spite of having a sufficient amount of xylitol for obtaining a superior sweetness as well as having a low water content, and a confectionary using such a fluidic food composition, can be provided.

The fluidic food composition according to the present invention is not particularly limited as long as it possesses fluidity and is used as food, and can be, among others, jam, paste, syrup, or center compositions for confectionaries, including, but not limited to, candy, chewing gum and chocolate. However, in regard to the food containing a large amount of water such as beverages and jelly-like food, xylitol is completely dissolved into the water portion. In these cases, the problem of loss of fluidity due to xylitol crystallization is not encountered, therefore, these are not encompassed in the fluidic food composition of the present invention. It should be noted that, the fluidic food composition according to the present invention indicates a matter that is fluid in a final product and does not encompass a final product that is fluid only in a manufacturing process or an intermediate product during a manufacturing process that is fluid. More specifically, the fluidic food composition according to the present invention is a matter that is fluid at a room temperature (25°C).

Effective sweetness conferring amount implies an amount of xylitol that can affect the sweetness imparted by the fluidic food compositions, and its specific content is determined appropriately by the types of the fluidic food compositions as well as by other ingredients. The effective sweetness conferring amount is no less than 20% by mass relative to the fluidic food composition, and no more than 80% by mass, and more preferably, no more than 70% by mass, or no more than 60% by mass. More specifically, the effective sweetness conferring amount relative to the fluidic food composition is in the range of 20-70% by mass, 20-60% by mass, 30-80% by mass, 30-70% by mass, 30-60% by mass. An amount is determined as the effective sweetness conferring amount by evaluating the differences in the intensity and quality of sweetness of a composition with the amount of xylitol and without xylitol, and by recognizing that the difference is significant or the difference is deemed to be significant empirically (for example, by containing a large amount). Xylitol is not crystallized. In the present specification, xylitol can be determined to be not crystallized by a DSC (differential scanning calorimeter) detecting no endothermic peak.

The content of glycerol can be adjusted appropriately to match the required length of time for suppressing the xylitol crystallization and also according to the amount of xylitol and other ingredients. If the glycerol content is too small, xylitol crystallization would not be suppressed for sufficient duration. Conversely, if the glycerol content is too high, it might not make economical sense and it may also compromise the functionality of the fluidic food composition. The glycerol content relative to the fluidic food composition is no less than 5% by mass, and more preferably no less than 10% by mass, or 15% by mass, or 20% by mass. It is also no more than 80% by mass, and more preferably, no more than 60% by mass, or 50% by mass or 40% by mass. In addition, the ratio of glycerol content relative to the xylitol content is preferably no less than 0.10, and more preferably no less than 0.20 or 0.30 or 0.40 (ratio by mass).

Sugar alcohol is not limited to a particular kind as long as it may be used as food additive, and may be one or more of sorbitol, erythritol, maltitol, reduced palatinose, lactitol, and mannitol, among others. In favorably improving the suppression of xylitol crystallization by glycerol, one or more sugar alcohols are preferably chosen from a group consisting of sorbitol, maltitol, and reduced palatinose. More preferably sorbitol, and most preferably sorbitol and maltitol should be included.

The content of sugar alcohol can be adjusted appropriately to match the required length of time for suppressing xylitol crystallization and according to the contents of xylitol amount, glycerol amount, and other ingredients. When the content of sugar alcohol is too low, it might be difficult to suppress crystalization of xylitol efficiently. When the content of sugar alcohol is too high, the sugar alcohol might increase cost of the composition and ruin the excellent sweentness of xylitol.

As described above, the fluidic food composition may be jam, paste, and syrup as well as center compositions for confectionaries such as candy and chewing gum. Glycerol can also lower the viscosity of a composition, thus, the content of glycerol can be adjusted according to the required viscosity of the composition. For example, in the cases of jam and paste, glycerol content may be 5 to 50% by mass, because of their relatively high viscosity. In the case of syrup, glycerol content may be 30 to 80% by mass, because of its requirement for lower viscosity. In the case of center compositions, glycerol content may be 10 to 50% by mass, because of its requirement for lower to intermediate viscosity.

The fluidic food composition can further contain a small amount of water and ethyl alcohol in accordance with its intended purpose.

As described above, if contained in a large amount, water would dissolve xylitol, thus removing the problem of xylitol crystallization and the need to use glycerol. For this reason, even if water is contained, its amount should be no more than 50% by mass relative to the fluidic food composition.

In the case of fluidic food composition being center compositions selected from a group of candy, chewing gum, and chocolate, it is preferable that the water content in the fluidic food composition is kept low. Specifically, the water content of fluidic food composition relative to the fluidic food composition no more than 5% by mass, or less than 5% by mass, or no more than 3% by mass. In the case of the fluidic food composition being center compositions for confectionaries described above, water can migrate to the confectionary composition surrounding the center composition compromising the confectionary composition. For example, in the case of confectionary being candy, the water that has migrated from center composition can dissolve the candy composition, causing leakage of the center composition. In addition, the candy composition touching the center composition can crystallize due to the presence of water and become whitened, making it difficult to externally confirm the condition of center composition (such as its color and shape).

Ethyl alcohol can confer fluidity to the fluidic food composition, but it can also exert an adverse effect on its flavor. In regard to the fluidic food composition according to the present invention, glycerol provides sufficient fluidity so that there is no need, if any, for including ethyl alcohol. Only a small amount is sufficient if it needs to be added. The content of ethyl alcohol relative to the fluidic food composition can be less than 1% by mass, and specifically, no more than 0.9% by mass.

The fluidic food composition can further include artificial coloring, artificial flavor, fruits and related products, artificial sweetener and therapeutic agents. Such ingredients can be those that are previously disclosed. Examples can be found in such documents as WO2008/079927. Specific examples include heating agent, cooling agent, stimulant, artificial flavor, artificial sweetener, acidulant, bittering agent, salt, surfactant, breath freshener, anti-bacterial agent, anti-tartar agent, anti-plaque agent, fluoride, re-mineralization agent, therapeutic agent, trace nutrient, throat caring agent, teeth whitening agent, energy supplements, concentration enhancing agent, appetite suppressing agent, and coloring agent among others, and can be included in any part or region of the confectionary. These ingredients can be used in a sufficient amount to obtain the required effect. Detailed descriptions on these previously disclosed agents are omitted here.

When using a fluidic food composition with low water content as the center composition in candies, it is preferable to include coloring agents (especially those of different colors from the shell compositions) to facilitate external confirmation of the condition (such as color and shape) of the center composition.

The amount of the ingredients listed above to be included in the fluidic food composition are measured by the quantification methods described in Japanese Standard of Food Additives (such as liquid chromatography (HPLC) and gas chromatography (GC)).

Fluidic food composition can be produced by previously disclosed methods. For example, xylitol, glycerol and sugar alcohol are dissolved and boiled down in a pot. Subsequently, the boiled down composition is cooled down, and optional ingredients are added to obtain the fluidic food composition.

### Confectionary

The present invention encompassed a confectionary comprising a center composition of fluidic food composition described above, and a shell composition that surrounds at least a part of the center composition, the shell composition being selected from a group consisting of candy, chewing gum and chocolate. The center composition maintains fluidity for long period of time, and provides a refreshing sensation to the consumer as it spread inside the mouth when a part of or all of the shell composition is consumed. Furthermore, since the center composition includes xylitol at the effective sweetness conferring amount, a sufficient sweetness required of confectionary is provided to the consumers.

The shell composition is not restricted to a certain kind, and can be candy composition (hard candy, soft candy, gummi candy and marshmallow etc.), chewing gum composition and chocolate among others. The shell composition can be sugar-free or sugared. The ratio of shell composition to center composition can be 0.25 to 33.3 (ratio by mass), and preferably 0.67 to 9.0 (ratio by mass). Since the shell composition itself can be comprised of previously disclosed ingredients, its detailed description is omitted.

The shell composition preferably fully surrounds the center composition in order to suppress leakage of the center composition, which has an excellent fluidity.

When the center composition contains only low amount of water, the melting of candy composition by water that has migrated occurs less. Therefore, candy can be adequately produced not only by the so-called deposit method (for example see WO2011/010723 pamphlet) but also by the so-called stamping method (for example see Japanese Examined Patent Application 2004-305078) that tends to form thin bodies on the shell composition. In regard to the production methods for chewing gum and chocolate, appropriate method can be picked from the previously disclosed methods (for example Japanese Unexamined Patent Application 2009-527256, and Japanese Examined Patent Application H4-190742).

In addition, when center composition contains only low amount of water, the crystallization of sugar alcohol in the shell composition occurs less. Thus it is possible to include various sugar alcohol such as reduced palatinose that tends to crystallize easily and maltitol that tends to absorb water, in the shell composition (candy for example) to further improve the quality of the confectionary. Furthermore, because it is easy to recognize the status of the center composition from outside, the candy can provide visually stimulating sensation to the consumer. In order to maximize the visually stimulating sensation, it is preferable to have large and/or multiple center compositions in candies, and to realize this by producing such candies using the deposit method described above. In addition, it is also preferable to select different coloring agents for center compositions and shell compositions, specifically, by varying the kind and the amount of coloring agents, to obtain different colors for center compositions and shell compositions.

### EXAMPLES

### Example 1

Xylitol, glycerol and sugar alcohol other than xylitol and glycerol were mixed in a ratio described in table 1 in a pot and boiled down until the water content was reduced to amounts shown in table 1. Fluidic food composition was then produced by cooling it down.

Fluidic food composition was placed in a vial and capped. The vial was then stored at 20°C, under 66% RH (relative humidity) for thirteen months and observed periodically for the presence or absence of crystallization. The results are shown in table 1.

**[table 1]**

| | Composition (% by mass) | Water Content (% by mass) | Results of Evaluation |
|---|---|---|---|
| Comparative Examples | 100% Xylitol | 0.0 | Crystallized immediately |
| | 100% Sorbitol | 0.0 | |
| | 100%Maltitol | 1.0 | Hardened immediately, and no fluidity observed |
| | 45% Xylitol | 0.0 | Exhibited fluidity, however, crystallized 3 months later |
| | +55% S orbitol | | |
| | 36% Xylitol | 1.0 | No fluidity observed |
| | +44% Sorbitol | | |
| | +20% Maltitol | | |
| Examples | 41% Xylitol | 0.5 | Exhibited fluidity and crystallized 9 months later |
| | +49% Sorbitol | | |
| | +10% glycerol | | |
| | 36 % Xylitol | 1.0 | Exhibited fluidity and no crystallizationobserved over 13 months |
| | +4 4% Sorbitol | | |
| | +20% glycerol | | |
| | 33% Xylitol | 1.0 | Exhibited fluidity and no crystallizationobserved over 13 months |
| | +39% Sorbitol | | |
| | +8% Maltitol | | |
| | +20% Glycerol | | |

As table 1 shows, by including glycerol and the sugar alcohol as ingredients, even though the fluidic food composition contains a large amount of xylitol exceeding 30% by mass and a very low water content, the suppression of xylitol crystallization and subsequent hardening of the composition is achieved for a long period of time. It also shows that by increasing or decreasing the amount of glycerol that is mixed in, it is possible to adjust the length of time during which the hardening due to xylitol crystallization is suppressed.

### Example 2

Reduced palatinose and reduced sugar syrup were mixed at the ratio of 9:1 in terms of solid portion, and at 1.0% by mass in terms of water content, and the mixture was heated and dissolved. To this, 0.8% by mass of citric acid, 0.4% by mass of flavoring agent, 0.05% by mass of acesulfame potassium, were added and mixed to produce the melt for the hard candy composition. The contents of ingredients are listed in table 2.

**[table 2]**

| Raw Materials | Ratio of Contents (% by mass) |
|---|---|
| Candy Dough (Reduced Palatinose : Reduced Sugar Syrup=9:1, Water Content 1.0% by mass) | 100.0 |
| CitricAcid | 0.8 |
| Flavoring Agent | 0.4 |
| AcesulfamePottasium | 0.05 |
| Total | 101.25 |

The dough for fluidic food composition was prepared using the same method as in Example 1. Amounts of xylitol, glycerol, sugar alcohol and water were as listed in table 3. To this, 0.8% by mass of flavoring agent and 0.2% by mass of safflower yellow coloring were added to produce the fluidic food composition for center composition.

Candies were then produced by the stamping method described above, using the prepared hard candy composition as the shell and each fluidic food compositions as the center. The ratio of shell composition and center composition was 90:10 (ratio by mass). Each candy was observed for the presence or absence of crystallization of center compositions (by actually taking out the center composition) and the whitening of the shell composition. The results are shown in table 3.

**[table 3]**

| Raw Materials | Water Content (% by mass) | Ratio of Contents(% by mass) | | | | | |
|---|---|---|---|---|---|---|---|
| | | Examples | | | | | |
| | | 2-1 | 2-2 | 2-3 | 2-4 | 2-5 | 2-6 |
| 41% Xylitol | 0.5 | 100.0 | | | | | |
| +49% Sorbitol | | | | | | | |
| +10%Glycerol | | | | | | | |
| 36% Xylitol | 1. 0 | | 100.0 | | | | |
| +44% Sorbitol | | | | | | | |
| +20% Glycerol | | | | | | | |
| 33% Xylitol | 1.0 | | | 100.0 | | | |
| +39% Sorbitol | | | | | | | |
| +8% Maltitol | | | | | | | |
| +20% Glycerol | | | | | | | |
| 24% Xylitol | 1. 0 | | | | 100.0 | | |
| +28% Sorbitol | | | | | | | |
| +8% Maltitol | | | | | | | |
| +40% Glycerol | | | | | | | |
| 36% Xylitol | 5. 0 | | | | | 100.0 | |
| +44% Sorbitol | | | | | | | |
| +20% Glycerol | | | | | | | |
| 36% Xylitol | 10.0 | | | | | | 100.0 |
| +44% Sorbitol | | | | | | | |
| +20% Glycerol | | | | | | | |
| Flavoring Agent | 0.0 | 0.8 | 0.8 | 0.8 | 0.8 | 0.8 | 0.8 |
| Safflower Yellow Coloring | 0.0 | 0.2 | 0.2 | 0.2 | 0.2 | 0.2 | 0.2 |
| Total | | 101.0 | 101.0 | 101.0 | 101.0 | 101.0 | 101.0 |
| Evaluations on Center Compositions | | Exhibited fluidity and crystallized 9 months later | Exhibited fluidity and no crystallization observed over 13 months | | | | |
| Evaluations on Shell Compositions | | No Change Observed over 13 months | | | | The part touching the center composition whitened after 12 months | The part touching the center composition whitened after 6 months |

As shown in table 3, by including glycerol in the fluidic food composition, hardening caused by the crystallization of xylitol was suppressed for more than 9 months. In addition, by increasing the content of glycerol to no less than 20% by mass, hardening caused by the crystallization of xylitol was suppressed for even longer period of time.

When the water content of the fluidic food composition was 10% by mass, the shell composition whitened within a short period of time making it impossible to see the condition of the center composition inside, however, when the water content was less than 10% by mass the whitening of the shell composition was delayed, and when the content was less than 5% the whitening was not observed at all, and in each case, the condition of the center composition was clearly observable.

### Example 3

Xylitol, sorbitol, maltitol and glycerin were added to a pot in a ratio shown in Table 4 (Example 3-1) and Table 5 (Example 3-2), heated and melted. After cooling the mixture down to 70°C, a flavoring agent, lecithin, a coloring, a high-sweetness sweetener, and water were added thereto, thereby preparing a fluidic food composition.

**[Table 4]**

| Example 3 -1 Contents | Ratio of Contents (% by mass) |
|---|---|
| Xylitol | 24 |
| Sorbitol | 28 |
| Maltitol | 8 |
| Glycerin | 40 |
| Flavoring | 3.6 |
| Lecithin | 0.4 |
| Gardenia blue coloring | 0.1 |
| Total | 102.62 |
| Water content | 0.0% |

**[Table 5]**

| Example 3 -2 Contents | Ratio of Contents (% by mass) |
|---|---|
| Xylitol | 33 |
| Sorbitol | 39 |
| Maltitol | 8 |
| Glycerin | 20 |
| Flavoring | 2 |
| Lecithin | 0.2 |
| Sucralose | 0.02 |
| Safflower yellow coloring | 0.1 |
| Water | 0.3 |
| Total | 102.62 |
| Water content | 0.3% |

For comparison, unprocessed xylitol powder (Comparative Example 1) and a composition (Comparative Example 2) obtained by heating and completely melting xylitol, cooling down to 80°C, adding water thereto, stirring, and crystallizing were prepared.

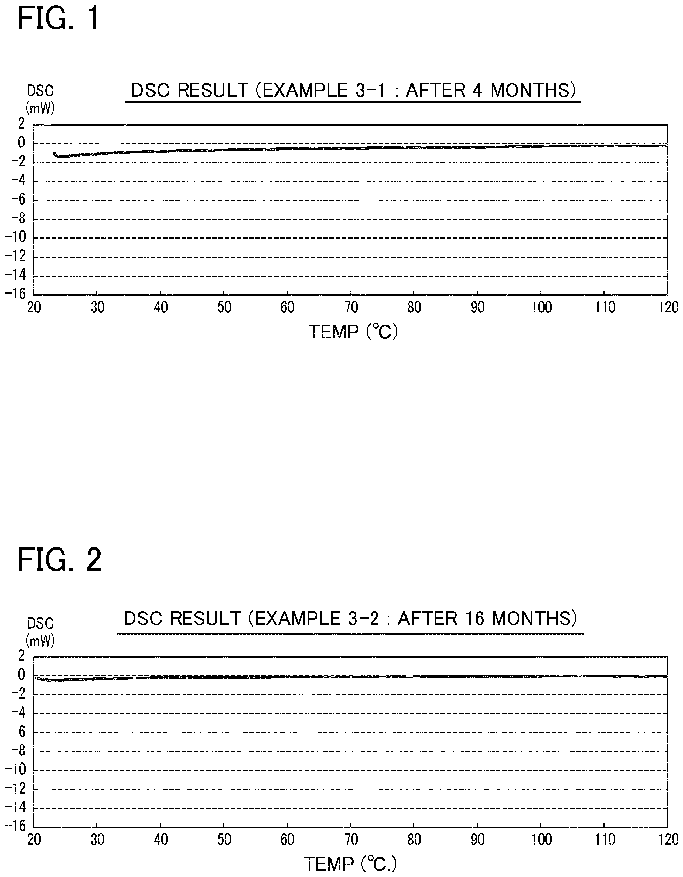

Under the same condition as Example 1, samples of Example 3-1, Example 3-2, and Comparative Example 2 are stored for four months, sixteen months, and two weeks, respectively. Thereafter, presence of crystal was determined using a DSC (differential scanning calorimeter) for the samples of Example 3-1, Example 3-2, and Comparative Examples 1 and 2. Results are shown in FIGS. 1 to 4.

Conditions for DSC analysis were as follows:
Amount of sample: 3 mg
Reference: 3 mg Alumina
Pan: Aluminum sealed pan
Gas: Nitrogen 30 ml/min
Rate of Temperature rise: 5°C/min (from room temperature to 120°C)

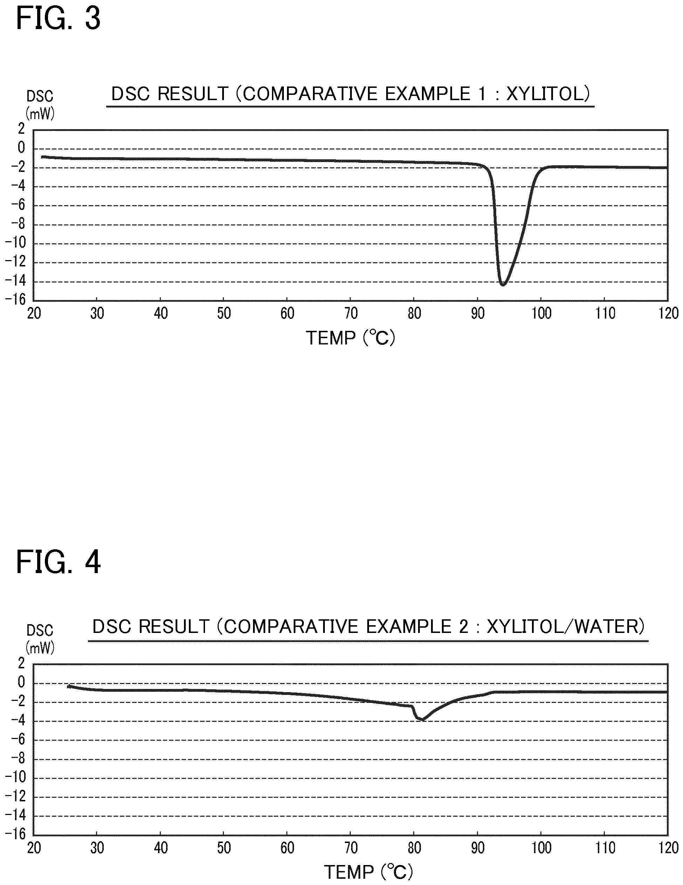

In FIG. 3, an endothermic peak due to melting of xylitol crystal is observed between 90 to 100°C, which is near the melting point of xylitol. In FIG. 4, endotherm continues to be increased until about 80°C due to dissolving of xylitol crystal and an endothermic peak is observed above 80°C. On the contrary, no endotherm is observed in FIGS. 1 and 2, which indicates that the fluidic food compositions according to Examples do not contain crystal.

## Claims

1. A fluidic food composition which is fluidic at 25°C, comprising glycerol, an effective sweetness conferring amount of xylitol and at least one kind of sugar alcohol excluding xylitol and glycerol,
wherein the effective sweetness conferring amount of xylitol is no less than 20% by mass and no more than 80% by mass relative to the fluidic food composition, wherein a content of water relative to the fluidic food composition is less than 5% by mass, wherein a content of glycerol relative to the fluidic food composition is no less than 5% by mass and no more than 80% by mass, and wherein the fluidic food composition has an absence of crystals of xylitol.

2. The fluidic food composition according to claim 1 wherein the sugar alcohol is at least one selected from sorbitol, maltitol and reduced palatinose.

3. The fluidic food composition according to claim 1 wherein a content of glycerol relative to the fluidic food composition is no less than 10% by mass and no more than 80% by mass.

4. The fluidic food composition according to claim 3 wherein the content of glycerol relative to the fluidic food composition is no less than 10% by mass and no more than 50% by mass.

5. The fluidic food composition according to claim 4 wherein the content of glycerol relative to the fluidic food composition is no less than 20% by mass and no more than 50% by mass.

6. The fluidic food composition according to any one of claims 1 to 5, that is used as a center composition for a confectionery selected from candy, chewing gum and chocolate.

7. The fluidic food composition according to any one of claims 1 to 6, wherein a content of ethyl alcohol relative to the fluidic food composition is less than 1% by mass.

8. A confectionery comprising: a center composition including the fluidic food composition according to any one of claims 1 to 7; and a shell composition that surrounds at least a part of the center composition, the shell composition being selected from candy, chewing gum and chocolate.

9. The confectionery according to claim 8, wherein the shell composition fully surrounds the center composition.

10. The fluidic food composition according to any one of claims 1 to 9, selected from jam, paste, syrup, and center compositions for confectionery.

## Patentansprüche

1. Flüssige Nahrungsmittelzusammensetzung, die bei 25 °C flüssig ist, enthaltend Glycerin, eine wirksame Süße vermittelnde Menge an Xylit und zumindest eine Art Zuckeralkohol, ausgeschlossen davon Xylit und Glycerin,
wobei die die wirksame Süße vermittelnde Menge an Xylit, bezogen auf die flüssige Nahrungsmittelzusammensetzung, nicht weniger als 20 Gew.-% und nicht mehr 80 Gew.-% beträgt, wobei der Wassergehalt, bezogen auf die flüssige Nahrungsmittelzusammensetzung, weniger als 5 Gew.-% beträgt, wobei der Gehalt an Glycerin, bezogen auf die flüssige Nahrungsmittelzusammensetzung, nicht weniger als 5 Gew.-% und nicht mehr als 80 Gew.-% beträgt, und wobei die flüssige Nahrungsmittelzusammensetzung keine Xylit-Kristalle aufweist.

2. Die flüssige Nahrungsmittelzusammensetzung nach Anspruch 1, wobei der Zuckeralkohol mindestens einer ausgewählt aus Sorbit, Maltit und hydrierter Palatinose ist.

3. Die flüssige Nahrungsmittelzusammensetzung nach Anspruch 1, wobei der Gehalt an Glycerin, bezogen auf die flüssige Nahrungsmittelzusammensetzung, nicht weniger als 10 Gew.-% und nicht mehr als 80 Gew.-% beträgt.

4. Die flüssige Nahrungsmittelzusammensetzung nach Anspruch 3, wobei der Gehalt an Glycerin, bezogen auf die flüssige Nahrungsmittelzusammensetzung, nicht weniger als 10 Gew.-% und nicht mehr als 50 Gew.-% beträgt.

5. Die flüssige Nahrungsmittelzusammensetzung nach Anspruch 4, wobei der Gehalt an Glycerin, bezogen auf die flüssige Nahrungsmittelzusammensetzung, nicht weniger als 20 Gew.-% und nicht mehr als 50 Gew.-% beträgt.

6. Die flüssige Nahrungsmittelzusammensetzung nach einem der Ansprüche 1 bis 5, zur Verwendung als Zusammensetzung des Kerns einer Flüssigkeit, ausgewählt aus Bonbons, Kaugummi und Schokolade.

7. Die flüssige Nahrungsmittelzusammensetzung nach einem der Ansprüche 1 bis 6, wobei ein Gehalt an Ethylalkohol, bezogen auf die flüssige Nahrungsmittelzusammensetzung, weniger als 1 Gew.-% beträgt.

8. Süßigkeit enthaltend: eine Kernzusammensetzung, enthaltend die flüssige Nahrungsmittelzusammensetzung nach einem der Ansprüche 1 bis 7, und eine Hüllenzusammensetzung, welche zumindest einen Teil der Kernzusammensetzung umschließt, wobei die Hüllenzusammensetzung ausgewählt ist aus Bonbons, Kaugummi und Schokolade.

9. Die Süßigkeit nach Anspruch 8, wobei die Hüllenzusammensetzung die Kernzusammensetzung vollständig umschließt.

10. Die flüssige Nahrungsmittelzusammensetzung nach einem der Ansprüche 1 bis 9, ausgewählt aus Marmelade, Paste, Sirup und Kernzusammensetzungen für Süßigkeiten.

## Revendications

1. Composition alimentaire fluide, qui est fluide à 25°C, comprenant du glycérol, une quantité efficace conférant un caractère sucré de xylitol et au moins un type d'alcool sucre, à l'exclusion du xylitol et du glycérol,
dans laquelle la quantité efficace, conférant un caractère sucré de xylitol, n'est pas plus petite que 20% en masse et n'est pas plus grande que 80% en masse, par rapport à la composition alimentaire fluide, une teneur en eau, par rapport à la composition alimentaire fluide, étant plus petite que 5% en masse, une teneur en glycérol, par rapport à la composition alimentaire fluide, n'étant pas plus petite que 5% en masse et pas plus grande que 80% en masse et la composition alimentaire fluide a une absence de cristaux de xylitol.

2. Composition alimentaire fluide suivant la revendication 1, dans laquelle l'alcool sucre est au moins l'un choisi parmi le sorbitol, le maltitol et le palatinose réduit.

3. Composition alimentaire fluide suivant la revendication 1, dans laquelle une teneur en glycérol, par rapport à la composition alimentaire fluide, n'est pas plus petite que 10% en masse et n'est pas plus grande que 80% en masse.

4. Composition alimentaire fluide suivant la revendication 3, dans laquelle la teneur en glycérol, par rapport à la composition alimentaire fluide, n'est pas plus petite que 10% en masse et n'est pas plus grande que 50% en masse.

5. Composition alimentaire fluide suivant la revendication 4, dans laquelle la teneur en glycérol, par rapport à la composition alimentaire fluide, n'est pas plus petite que 20% en masse et n'est pas plus grande que 50% en masse.

6. Composition alimentaire fluide suivant l'une quelconque des revendications 1 à 5, qui est utilisée comme composition de centre, pour une confiserie choisie parmi un bonbon, une gomme à mâcher et du chocolat.

7. Composition alimentaire fluide suivant l'une quelconque des revendications 1 à 6, dans laquelle la teneur en alcool éthylique, par rapport à la composition alimentaire fluide, est plus petite que 1% en masse.

8. Confiserie comprenant une composition de centre incluant la composition alimentaire fluide suivant l'une quelconque des revendications 1 à 7 et une composition de coquille, qui entoure au moins une partie de la composition de centre, la composition de coquille étant choisie parmi un bonbon, de la gomme à mâcher et du chocolat.

9. Confiserie suivant la revendication 8, dans laquelle la composition de coquille entoure complètement la composition de centre.

10. Composition alimentaire fluide suivant l'une quelconque des revendications 1 à 9, choisie parmi de la confiture, de la pâte, du sirop et des compositions de centre pour de la confiserie.
